# EUROPEAN PATENT SPECIFICATION

(11) **EP 2 623 932 B1**
(45) Date of publication and mention of the grant of the patent: **23.11.2016**
(21) Application number: 13153586.6
(22) Date of filing: 01.02.2013
(51) Int. Cl.: G01C 21/32, G01C 21/34

(54) **Navigation system and route search method**
Navigationssystem und Routensuchverfahren
Système de navigation et procédé de recherche d'itinéraire

(30) Priority: 03.02.2012 JP 2012021744
(43) Date of publication of application: 07.08.2013
(73) Proprietor: Clarion Co., Ltd., Saitama 330-0081 (JP)
(72) Inventor: HIRUTA, Tomoaki, Tokyo, 100-8220 (JP); OKUDE, Mariko, Tokyo, 100-8220 (JP); AMAYA, Shinichi, Saitama, 330-0081 (JP); KUMAGAI, Masatoshi, Tokyo, 100-8220 (JP)
(74) Representative: MERH-IP Matias Erny Reichl Hoffmann Patentanwälte PartG mbB

(56) References cited:
- JP-A- H1 038 597
- JP-A- 2002 286 478
- JP-A- 2008 309 569
- JP-A- 2009 294 153
- JP-B- 3 244 517
- US-A1- 2004 083 055

## Description

The present invention relates to a navigation system and a route search method.

Japanese Patent Gazette No. 3244517 discloses a route search processing method that may be adopted in a navigation system whereby roads are grouped into a plurality of regions, the connections among the various regions are separately stored, regions connecting two regions, one to which an origin belongs and the other to which a destination belongs, are selected and then a route search is conducted in conjunction with the roads present in the selected regions. In this method, regions are selected so as to achieve the smallest possible value for the total of distances, each stretching from a representative point representing one of the selected regions and a representative point representing a selected region successive to the one selected region.

In the art disclosed in Japanese Laid Open Patent Publication No. 2007-199575, a navigation system searches for all routes that connect a given parcel with another parcel, in correspondence to each specific combination of two parcels. In this navigation system, data enabling identification of each parcel through which a given route passes are included in map data. The navigation system executes the actual route search by using specific data in the map data, i.e., map data representing all the parcels through which all routes corresponding to the particular combination of the parcel containing the origin and the parcel containing the destination pass.

While the art disclosed in Japanese Patent Gazette No. 3244517 guarantees that there is at least one route connecting the origin to the destination, it is not certain that the route search results will yield two or more routes from the origin to the destination point. This means that in the event of traffic congestion or an accident in a segment of the route, it may not be possible to find an alternative route that bypasses the segment.

In the art disclosed in Japanese Laid Open Patent Publication No. 2007-199575, all the routes extending from the parcel containing the origin to the parcel containing the destination are calculated and all the parcels through which these routes pass are identified and selected. Thus, an alternative route may be present through the selected parcel areas. However, the processing target area is bound to be large, thus requiring a great deal of time for computation processing.

In JP 2008309569 A a vehicle navigation apparatus for reducing a route search time is described. Thereby a map data inputting device reads map data and stores the map data in a memory of a controller in the vehicle navigation apparatus. The map data is divided by a plurality of meshes on a two-dimensional plane. The mesh within the map data is determined by a combination of the mesh to which a current location of a vehicle belongs and a mesh to which a destination of the vehicle belongs. The controller uses mesh only included in the mesh data and in its order only, implements a route search for guiding a vehicle, and cannot use the other mesh and the other order when the route is searched.

In JP H10 38597 A a route guidance equipment for correcting the link cost of the objective road or traffic information on a road map by receiving traffic information and searching the optimum road is described.

In JP 2009 294153 A a route guide server includes a map information storing part for storing map data including link data expressing a walking passage, node data indicating the end point of a link, classification data indicating classification of the link, and link cost data. It is thereby an object to provide a route searching device for searching a route suitable for pedestrians.

In US 2004/0083055 A1 a route provision apparatus is described. Said apparatus includes a veering detection unit for employing the current position data obtained by a position acquisition unit and route data for an originally determined travel route to detect whether a vehicle has veered away from a determined travel route.

In JP 2002 286478 A a guiding route researching method is described. The method comprises a step for researching for a guide route from a departure point to a destination, displaying it on a display, and then researching for another guiding route by selecting roads unwanted by a user to run from the guiding route and roads wanted to run among roads on the display.

The invention is defined by the appended claims.

### BRIEF DESCRIPTION OF THE DRAWINGS

FIG. 1 is a block diagram presenting an example of an overall configuration that may be adopted in the navigation system achieved in a first embodiment of the present invention.
FIGS. 2A and 2B each present an example of a structure that may be adopted for map data used in the navigation system in the first embodiment of the present invention.
FIG. 3 presents a flowchart of the zonal network data creation processing.
FIG. 4 presents a flowchart of the zonal network information processing.
FIGS. 5A and 5B each present examples of parcels connected with one another.
FIG. 6 presents a flowchart of the passage frequency information processing.
FIG. 7 shows the structure of the format adopted when storing route search results.
FIGS. 8A through 8G illustrate the concept of the passage frequency indicated in the zonal network data.
FIG. 9 presents a flowchart of the processing executed in order to determine the search area.
FIG. 10 is an illustration presenting an example of alternative route search results.
FIG. 11 shows how the route search results may be provided on display.
FIG. 12 shows how the route search results may be provided on display.
FIG. 13 shows how the route search results may be provided on display.

### DESCRIPTION OF PREFERRED EMBODIMENT

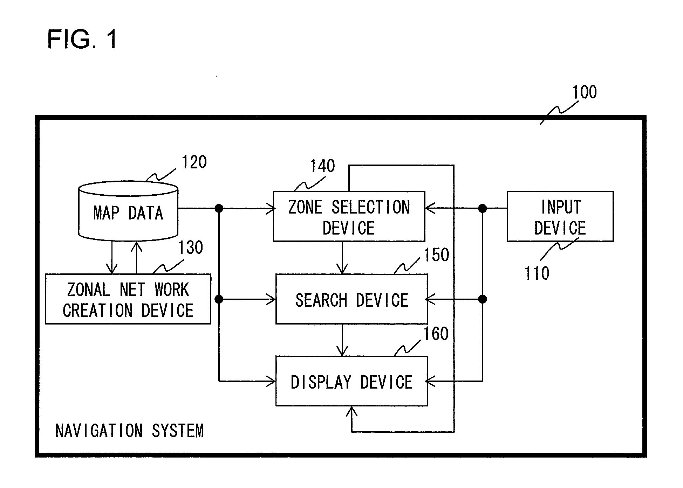

FIG. 1 shows the overall configuration of the navigation system achieved in the first embodiment of the present invention. A navigation system 100 in FIG. 1 comprises an input device 110, map data 120, a zonal network creation device 130, a zone selection device 140, a search device 150 and a display device 160. The following description is given by assuming that the navigation system 100 is an on-board system installed in a vehicle.

The origin and the destination for a route are input at the navigation system 100 via the input device 110. The input device 110 is configured with a user interface such as a touch panel, a jog dial or various switches, and sensors used to detect the vehicle position, such as a GPS (global positioning system) receiver and an angular velocity sensor. The destination is input via the user interface. The origin is input via the user interface or via the sensors. Information indicating the origin and the destination input via the input device 110 is provided to the zone selection device 140, the search device 150 and the display device 160.

The method for origin input achieved via the sensors will be described next. Output signals provided by the sensors constituting the input device 110 are generated as the sensors measure the position of the vehicle, the angular velocity and the like. The navigation system 100 is able to obtain, through calculation, vehicle position information by processing these output signals through Kalman filtering or dead reckoning of the known art.

The map data 120, which express a road map divided into a plurality of partitioned areas referred to as parcels, are stored in a storage device such as a hard disk or a flash memory. The map data 120 include road information, POI (points of interest) information and image data expressing various types of icons and the like. The road information, made up with road data and zonal network data, which are to be described in detail later, is provided to the zone selection device 140, the search device 150 and the display device 160. The POI information pertains to geographical points at which facilities such as stores are located. The user, using the street address, the category, the telephone number or the like as a key, is able to input the destination (or the origin) by searching through the map data 120 for the POI information on the destination via the user interface included in the input device 110. The road information will be described in detail later.

The zonal network creation device 130 is configured as a software program executed via a microprocessor, a RAM, a ROM and the like (none shown) installed in the navigation system 100. The zonal network creation device 130 creates information that includes zonal network data, expressing connections among a plurality of parcels present within a specific range of the road map expressed by the map data 120, and data indicating the passage frequency for each parcel. The specific range of the road map expressed by the map data 120 may be either part of the road map expressed by the map data 120 or it may be the entire range of the road map expressed by the map data 120. The zonal network creation device 130 then writes the information it has created in the map data 120. The processing executed by the zonal network creation device 130 will be described in further detail later.

The zone selection device 140 is configured as a software program executed via the microprocessor, the RAM, the ROM and the like (none shown) installed in the navigation system 100. In the following description, a plurality of zones selected by the zone selection device 140 will be collectively referred to as a search area. Based upon the origin and the destination input via the input device 110, the zone selection device 140 selects zones connecting the parcel containing the origin with the parcel containing the destination by using the zonal network data included in the map data 120. The zone selection device 140 calculates a minimum cost route extending from the parcel containing the origin (hereafter referred to as the origin parcel) to the parcel containing the destination (hereafter referred to as the destination parcel) and an alternative route also extending from the origin parcel to the destination parcel, and designates the union of these sets of zones through which the individual routes pass as a search area. Information pertaining to the search area thus calculated is provided to the search device 150 and the display device 160. The processing executed by the zone selection device 140 will be described in further detail later.

The search device 150 is configured with the microprocessor, the RAM, the ROM and the like (none shown) installed in the navigation system 100. The search device 150 determines a guided route from the origin to the destination by using the Dijkstra algorithm of the known art based upon the road data stored as part of the map data 120, the search area information input thereto from the zone selection device 140, and the destination and the origin provided via the input device 110. The search device 150 executes a route search to determine a route from the origin to the destination, indicated by the input device 110, by caching road data in the map data 120, which correspond to the roads in the parcels present within the search area having been input thereto from the zone selection device 140 and using the road data thus cached. The search device 150 then provides route information to the display device 160.

The display device 160, constituted with a liquid crystal display unit or the like, has two functions. Its first function allows a guided route to be displayed over a map based upon the road data and the zonal network information, both included in the map data 120, and information pertaining to the guided route originating from the search device 150, all input to the display device 160. The second function allows the road data and the zonal network data in the map data 120 and the search area information originating from the zone selection device 140 to be brought up on display so as to enable the zone selection device 140 to select a high-frequency parcel.

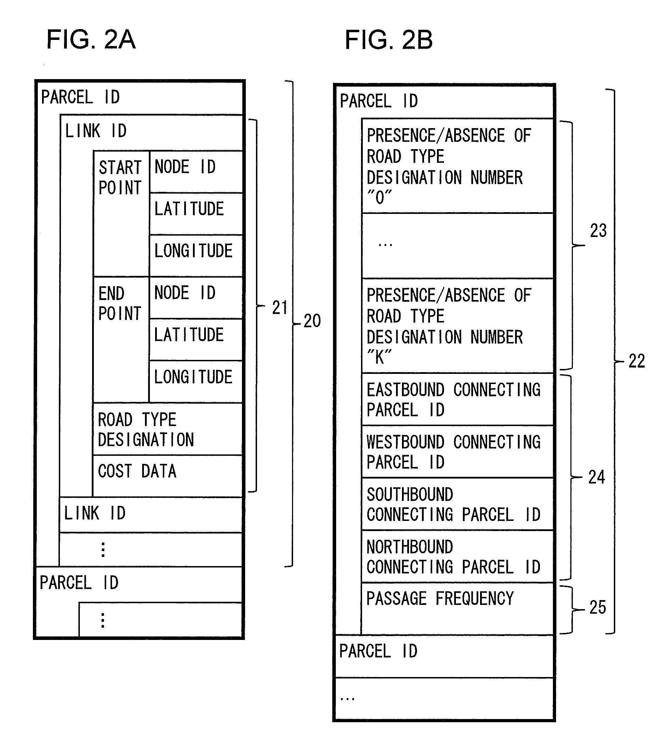

Next, the road data and the zonal network data constituting the map data 120 will be described in reference to FIGS. 2A and 2B. FIG. 2A presents an example of a data format that may be adopted for the road data. FIG. 2B presents an example of a data format that may be adopted for the zonal network data.

The road data in FIG. 2A are stored in the map data 120 in units of individual parcels. Parcels are partitioned map areas defined by dividing a map into a plurality of areas forming a parcel pattern, with adjacent parcels separated by specific latitudinal and longitudinal lines. Information 20 representing each parcel includes a parcel ID used to identify the particular parcel and information pertaining to the roads present in the parcel.

The road data representing the roads in each parcel are stored in the map data 120 in units of individual road links. Road link information 21 representing each road link includes a link ID used to identify the particular road link, information indicating a start point and an end point of the road link, information indicating the road type designation and cost data.

The information indicating the start point and the end point of each road link makes it possible to determine the direction along which the road link extends and the position of the road link on the map. Nodes, each indicating a specific geographical point, are present at the start point and the end point of the road link, and the start point information and the end point information each include a node ID used to identify the corresponding node and latitude/longitude information indicating the position of the node.

The road type designation information indicates the road type designation of the road corresponding to the particular road link. Specific numbers are assigned to various road type designations. For instance, "0" may indicate that the road corresponding to the road link is an intercity expressway, "1" may indicate a metropolitan expressway, "2" may indicate a national highway and "3" may indicate another type of road. The other type of road may be, for instance, an urban street.

The cost data indicate the road link weight applied to each road link used by the search device 150 when executing a route search, and a route cost represents the cost required to travel from the start point of a route through the end point of the route. The cost data are made up with statistical traffic information and with various types of cost data including link length information and traveling time information. The following description is given by assuming that the cost data indicate the link length. The guided route determined through a route search executed by the search device 150 by using cost data indicating the link lengths is a minimum distance route through which the vehicle having departed the origin is able to reach the destination over the smallest traveling distance.

The zonal network data shown in FIG. 2B are stored in the map data 120 in units of individual parcels. Information 22 indicating the zonal network around each parcel includes a parcel ID used to identify the particular set of information 22, road type information 23 pertaining to the presence of various types of roads within the parcel, connecting parcel information 24 indicating parcels connecting to the particular parcel and passage frequency information 25 indicating the frequency with which the parcel is passed through. The road type information 23 indicates whether or not the parcel contains a road link assigned with any of the road type designation numbers 0, 1, ..., k. The connecting parcel information 24 includes information indicating the parcel IDs of parcels connecting with the parcel in the eastbound direction, the westbound direction, the southbound direction and the northbound direction. The information 22 is generated by the zonal network creation device 130.

The information 23 indicates the road type designations assigned to the road links contained in the subject parcel. In correspondence to each of the road type designation numbers 0 through k, the information 23 indicates "1" if the parcel contains any road link with a given road type designation among the various road type designations but indicates "0" if the parcel does not contain any road link with the particular road type designation. For instance, if all the road links present in the parcel bear the intercity expressway (road type "0") designation, "1" is stored in the road type "0" field and "0" is stored in all the other road type fields. By referencing the information 23, the types of roads present in each parcel can be ascertained. This road type information is utilized by the zone selection device 140.

In the information 24, parcel ID information indicating the parcel IDs of parcels connecting with the subject parcel is stored in correspondence to various connecting directions, i.e., the eastbound direction, the westbound correction, the southbound direction and the northbound direction. In other words, information indicating connections among parcels is stored in the information 24. The concept of "parcel connection" is defined as follows. Namely, the subject parcel is considered to be in connection with an adjacent parcel if there is a road link passing through the boundary between the parcel and the adjacent parcel.

The passage frequency information 25 indicates the number of times a route determined through a route search executed by using the zonal network data passes through the subject parcel as a numerical value. A greater numerical value is assumed for a high passage frequency parcel.

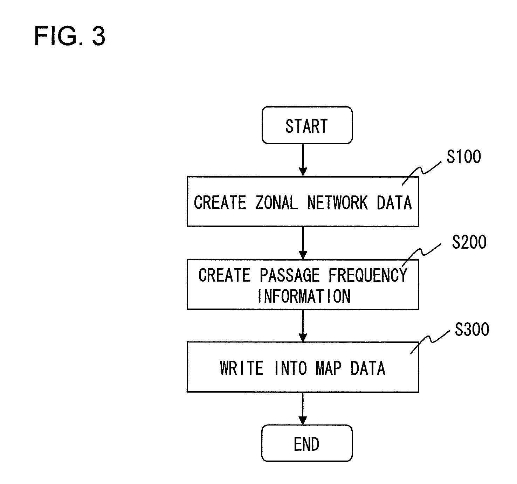

The processing through which the zonal network creation device 130 creates the information 22 in the zonal network data is described in reference to the flowchart presented in FIG. 3. The navigation system manufacturer, the map data vendor or the like engages the zonal network creation device 130 in execution of the processing shown in FIG. 3, for instance, before the navigation system is shipped from the factory.

The zonal network creation device 130 executing the processing shown in FIG. 3 creates zonal network data based upon the node information included in the road link information 21 in the road data. In addition, the passage frequency information 25 is created by executing route search processing to determine all the routes connecting the start point parcel and the end point parcel in correspondence to each conceivable combination of a start point parcel and an end point parcel and calculating the passage frequency for each parcel through which each route having been determined through the search passes.

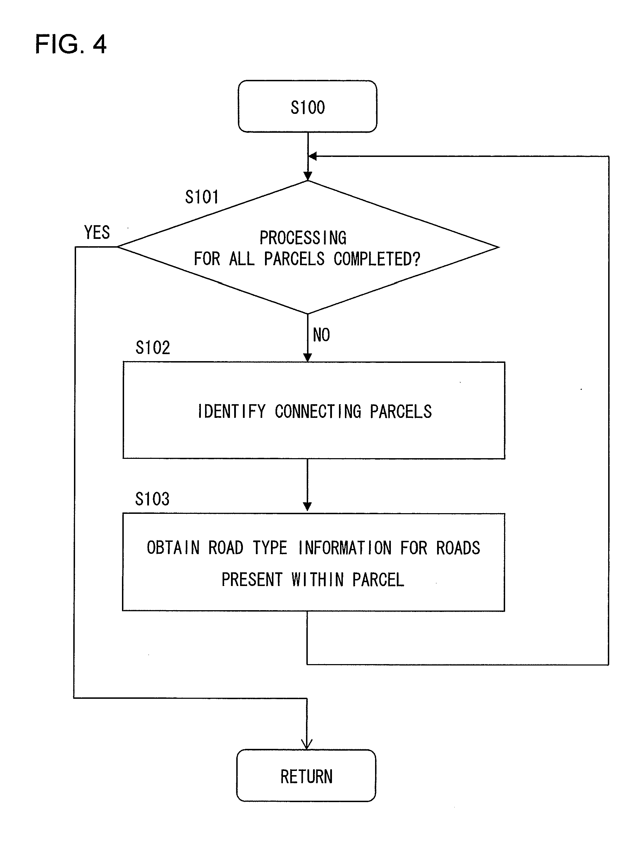

In step S100 in FIG. 3, the zonal network creation device 130 creates the information 23 and the information 24 in the zonal network data based upon the start point information and the end point information in the road link information 21 pertaining to the relevant road links, which is included in the road data stored in the map data 120. The processing executed in step S100 will be described in further detail later in reference to the flowchart presented in FIG. 4.

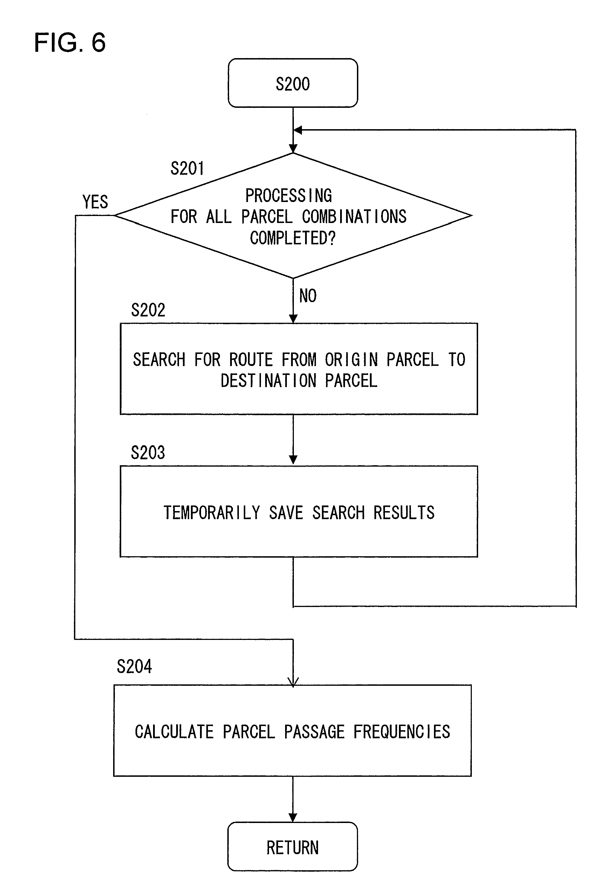

In step S200 in FIG. 3, the zonal network creation device 130 creates the passage frequency information 25 based upon the information 23 and the information 24 in the zonal network data stored in the map data 120. The processing executed in step S200 will be described in further detail later in reference to the flowchart presented in FIG. 6.

In step S300 in FIG. 3, the zonal network creation device 130 writes the information 23 and the information 24 created in step S100 and the information 25 created in step S200 into the zonal network data stored in the map data 120. Once the processing in step S300 is completed, the processing shown in FIG. 3 ends.

In step S101 in FIG. 4, the zonal network creation device 130 makes a decision as to whether or not execution of the processing in step S102 through step S103 has been completed for all the information 20 stored in the map data 120 in correspondence to all the parcels. If an affirmative decision is made in step S101, the processing in FIG. 4 ends. However, if a negative decision is made in step S101, the operation proceeds to step S102.

In step S102 in FIG. 4, the zonal network creation device 130 searches for any parcel connecting with the parcel selected through step S101. The zonal network creation device 130, executing the processing in step S102, verifies whether or not there is a node present on each boundary among the boundaries defining the four sides of the parcel selected through step S101, i.e., the east, the west, the south and the north sides of the subject parcel, by referencing the road data in the map data 120. If there is at least one node present on the particular boundary, the zonal network creation device 130 determines the parcel ID of the parcel connected with the subject parcel via the node.

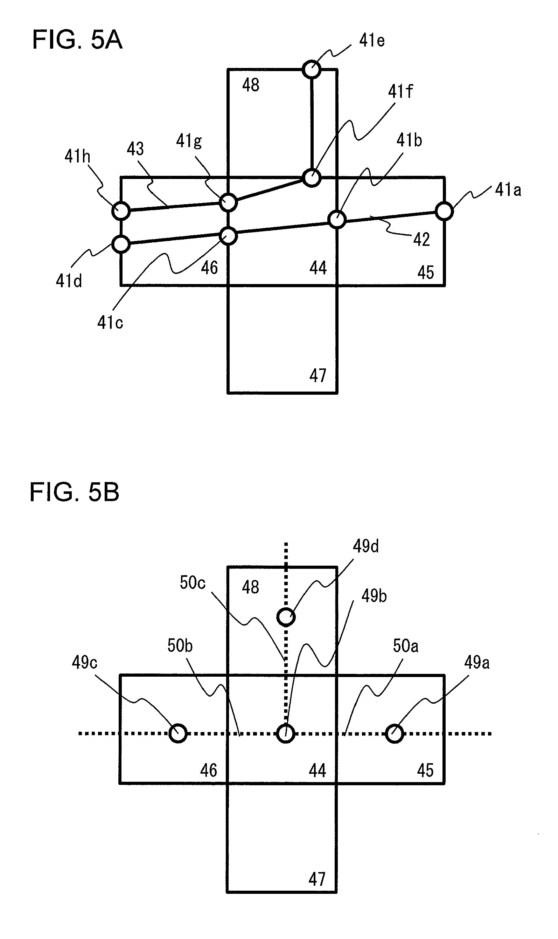

FIG. 5A provides a conceptual diagram illustrating the details of the processing executed in step S102. Since the map is managed in units of individual parcels, nodes 41a, 41b..., and 41f are defined at parcel boundaries if a road 42 and a road 43 run astride a plurality of successive parcels. The following description will be given by assuming that a parcel 44 has been selected as the subject parcel through step S101. The road 42 runs astride the parcel 44 and a parcel 45 located to the east of the parcel 44. The parcel 45 connects with the parcel 44 via the node 41b. In addition, the road 42 and the road 43 both run astride the parcel 44 and a parcel 46 located to the west of the parcel 44. The parcel 46 connects with the parcel 44 via the node 41c and a node 41g. A parcel 47 located to the south of the parcel 44 does not connect with the parcel 44. A road 45 runs astride the parcel 44 and a parcel 48 located to the north of the parcel 44. The parcel 48 connects with the parcel 44 via the node 41f.

FIG. 5B schematically illustrates the information expressed with the zonal network data. In this example, representative nodes 49a, 49b, 49c and 49d are defined respectively at central positions in the parcel 44, the parcel 45, the parcel 46 and the parcel 48 and a parcel connecting link 50a running between the representative node 49a and the representative node 49b, a parcel connecting link 50b running between the representative node 49b and the representative node 49c and a parcel connecting link 50c running between the representative node 49b and the representative node 49d are defined so as to simulate an actual road link network. As a result, network data are generated based upon the representative nodes representing the individual parcels and the parcel connecting links connecting the representative nodes representing parcels that are connected with each other. These network data express information pertaining to the connections among the parcels. FIG. 5B is a schematic diagram illustrating the information pertaining to the parcel connections, which is obtained through the processing executed in step S102 for the parcels in FIG. 5A based upon the representative nodes 49a, 49b, 49c and 49d and the parcel connecting links 50a, 50b and 50c. Thus parcel connection information is then written into the map data 120 as the zonal network data information 24. Once the processing in step S102 is completed, the operation proceeds to step S103.

In step S103 in FIG. 4, the zonal network creation device 130 obtains the road type information pertaining to the road links contained in the parcel selected through step S101 from the road data in the map data 120. In step S103, all the information corresponding to the road links contained in the parcel is retrieved, and a decision is made as to whether or not the parcel contains any road link corresponding to each road type designation number among the road type designation numbers 0, 1, ..., k. If there is any road link among the road links present in the parcel that corresponds to the road type designation "0", "1" is entered in the field for information indicating whether or not there is any road link with the road type designation "0" in the zonal network data information 23 included in the map data 120. However, "0" is entered in the field for indicating whether or not there is any road link with the road type designation "0", if there is no road link corresponding to the road type designation "0" present in the parcel. Similar processing is executed for each of the other road type designation numbers 1, 2, ..., k. Once the processing in step S 103 is completed, the operation proceeds to step S101.

In step S201 in FIG. 6, the zonal network creation device 130 makes a decision as to whether or not execution of the processing in step S202 and step S203, which will be described in detail later, has been completed in correspondence to all possible combinations of the parcels stored in the zonal network data information 24 as part of the map data 120. If a negative decision is made in step S201, a single set of parcels among the parcel combinations yet to undergo the processing is designated as a target parcel set, the representative nodes of the parcels in the set are designated as the origin and the destination and the processing in step S202 through step S203 is executed in conjunction with the origin and the designation thus designated. At this time, the parcel corresponding to the representative mode selected as the origin is the origin parcel and the parcel corresponding to the representative node selected as the destination is the destination parcel. If there are n parcels, for instance, there will be n x (n - 1) possible combinations of origins and destinations. If an affirmative decision is made in step S201, the operation proceeds to step S204.

In step S202 in FIG. 6, the zonal network creation device 130 executes a route search for a route between the representative nodes in the set of parcels selected through step S201, i.e., a search for a route from the origin to the destination, based upon the zonal network data information 24 in the map data 120. This route search is executed so as to determine a recommended route achieving the least sum of travel costs over a range extending from the origin to the destination through, for instance, the Dijkstra algorithm of the known art, by using the zonal network data information 24 in the map data 120 and the network data generated as described earlier based upon the parcel representative nodes and the parcel connecting links. In order to enable such a route search, a travel cost must be defined in correspondence to each parcel connecting link. This travel cost may be represented by, for instance, the distance between the parcels respectively corresponding to the representative nodes present at the two ends of the parcel connecting link. Based upon these travel costs, the shortest route between the representative nodes respectively belonging to the parcels in the parcel set selected through step S201 can be calculated. It is to be noted that the travel costs may each be calculated as a function of the road type information 23 included in the zonal network information 22. In such a case, the travel cost will assume a value obtained by multiplying the distance between the parcels by the road type designation number. By factoring in the road type information, the parcel containing a major artery such as an expressway can be selected with priority. Once the processing in step S202 is completed, the operation proceeds to step S203.

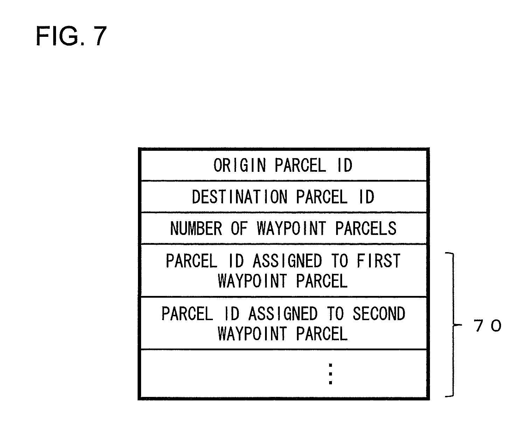

In step S203 in FIG. 6, the zonal network creation device 130 temporarily saves the entire route search results, obtained through step S202 in correspondence to all the parcel combinations, into a storage area of the zonal network creation device 130. FIG. 7 presents an example of a data format that may be adopted for storing the route search results into the storage area of the zonal network creation device 130. The data formatted as shown in FIG. 7 are made up with the origin parcel ID, the destination parcel ID, the number of waypoint parcels through which the subject vehicle, traveling from the origin parcel to the destination parcel, will pass, and parcel ID information 70 indicating the parcel IDs of the waypoint parcels through which the vehicle will pass. Once the processing in step S203 is completed, the operation proceeds to step S201.

In step S204 in FIG. 6, the zonal network creation device 130 tabulates all the route search results having been stored into the storage area as described above so as to calculate the passage frequency in correspondence to each parcel. In the processing executed in step S204, the number of times each parcel ID, among the parcel IDs assigned to all the parcels, appears in the route search result information 70 stored in the storage area, is counted. This count value is stored as the information 25, indicating the passage frequency of the particular parcel.

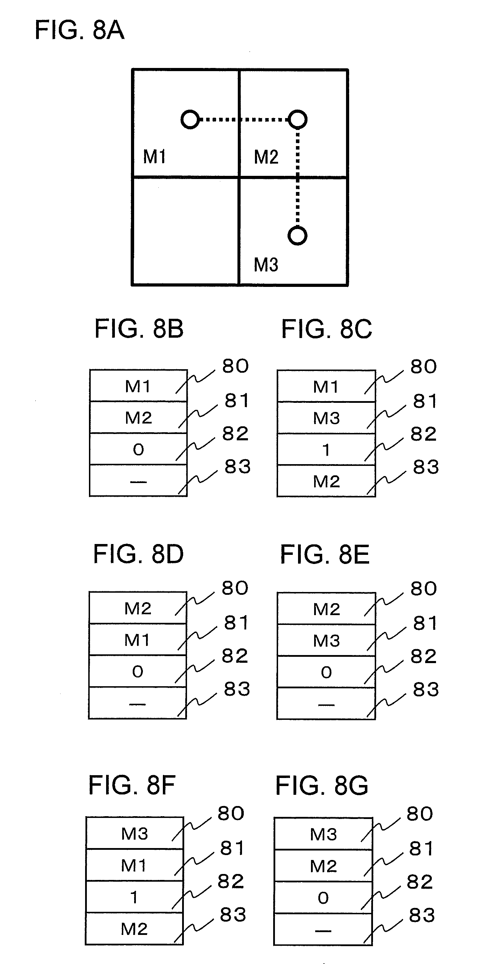

FIGS. 8A through 8G present conceptual diagrams illustrating how parcel passage frequencies are determined. FIG. 8A presents an example of zonal network data. In this example, a parcel M1 and a parcel M2 connect with each other and the parcel M2 also connects with a parcel M3. FIGS. 8B through 8G show six sets of route search result information stored in the storage area of the zonal network creation device 130 as described above. Information 80 indicates the origin parcel ID, information 81 indicates the destination parcel ID, information 82 indicates the number of waypoint parcels, information 83 indicates the waypoint parcel IDs. Through the six sets of route search result information presented in FIGS. 8B through 8G, the parcel ID M2 is stored twice in the information 83, and accordingly, the passage frequency of the parcel M2 is "2". In addition, neither the parcel ID M1 nor the parcel ID M3 is entered in the information 83, and accordingly, the passage frequencies of the parcel M1 and the parcel M3 are both "0". The passage frequencies thus determined are stored as the information 25 by the zonal network creation device 130.

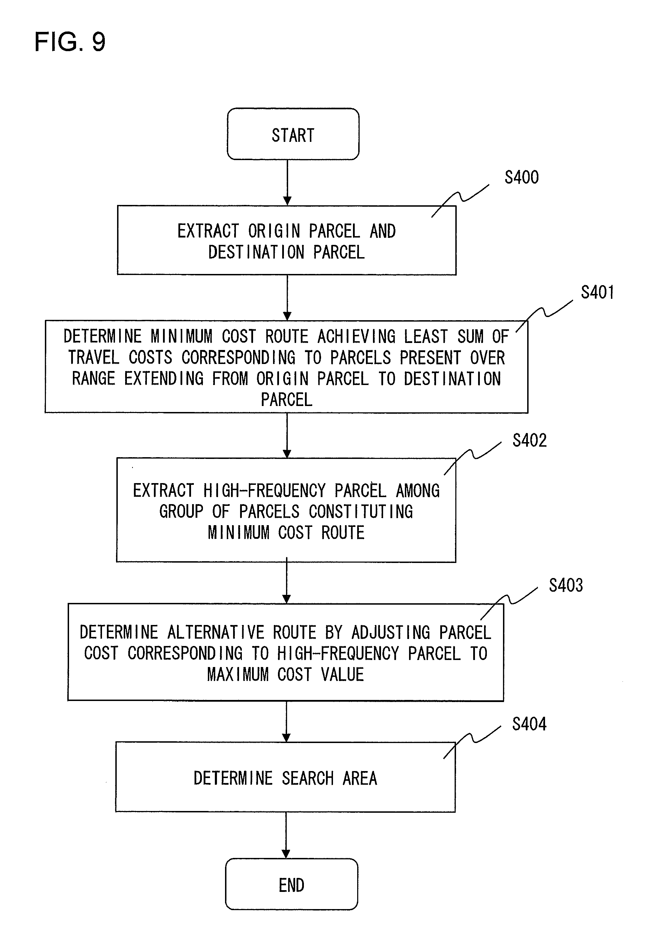

Next, in reference to the flowchart presented in FIG. 9, the method adopted by the zone selection device 140 for determining the search area based upon the zonal network data in the map data 120 and the information indicating the origin and the destination, input via the input device 110, will be described. The processing shown in FIG. 9 is executed by the zone selection device 140 in the navigation system 100 as the origin and the destination are input via the input device 110.

In step S400 in FIG. 9, the zone selection device 140 extracts the parcels to which the origin and the destination, having been input via the input device 110, belong (extracts the origin parcel and the destination parcel). In this step, the zone selection device 140 searches for the node IDs assigned to the nodes corresponding to the origin and the destination or searches for the node IDs assigned to nodes present near the origin and the destination and further searches for the parcel IDs corresponding to these node IDs by referencing the road data in the map data 120 so as to extract the parcels containing the origin and the destination. Once the processing in step S400 is completed, the operation proceeds to step S401.

In step S401 in FIG. 9, the zone selection device 140 determines the minimum cost route, achieving a least sum of travel costs (parcel costs) over the range extending from the origin parcel to the destination parcel through, for instance, the Dijkstra algorithm or the like of the known art by using the zonal network data in the map data 120. The travel costs used in the calculation executed in this step each represent the distance between parcels. Based upon these travel costs, the shortest route between the representative nodes representing the origin parcel and the destination parcel, having been extracted in step S400, can be calculated. It is to be noted that the travel costs may each be calculated as a function of the road type information 23 included in the zonal network information 22. The zone selection device 140 then temporarily saves the minimum cost route search results indicating the minimum cost route extending from the origin parcel to the destination parcel, having been calculated as described above, into its storage area by adopting a data format similar to that described in reference to FIG. 7. The area selection device 140 may determine a plurality of minimum cost routes each in correspondence to one of the different types of travel costs calculated through different calculation methods. Once the processing in step S401 is completed, the operation proceeds to step S402.

In step S402 in FIG. 9, the zone selection device 140 extracts a parcel with a high passage frequency from the group of parcels constituting the minimum cost route calculated in step S401, based upon the passage frequency information 25 included in the zonal network data information 22 in the map data 120. The object of this parcel extraction is to enable a search for an alternative route through the processing executed in step S403, as will be described later, by detecting a parcel with a high passage frequency (hereafter referred to as a high-frequency parcel) and setting a higher travel cost for the high-frequency parcel. The high-frequency parcel extracted in this step is a parcel with the passage frequency thereof represented by a value greater than a predetermined value among the group of parcels constituting the route determined through the calculation executed in step S401. In addition, the passage frequencies of the individual parcels in the parcel group may be indicated to the user at the display device 160. In such a case, the zone selection device 140 is able to extract a parcel selected by the user via the user interface included in the input device 110 as the high-frequency parcel. Once the processing in step S402 is completed, the operation proceeds to step S403.

In step S403 in FIG. 9, the zone selection device 140 adjusts the travel cost for traveling from the high-frequency parcel extracted in step S402 to the adjacent parcel (the parcel cost set in correspondence to the high-frequency parcel) to a value representing the maximum cost (cost upper limit) that can be handled in the route search processing and re-executes a route search calculation to determine a route from the origin parcel to the destination parcel by using the zonal network data in the map data 120. As a result of the route search calculation executed in step S403, an alternative route that bypasses the high-frequency parcel is obtained. Once the processing in step S403 is completed, the operation proceeds to step S404.

In step S404 in FIG. 9, the zone selection device 140 designates the group of parcels making up the route calculated in step S401 as a search area and also designates the group of parcels making up the alternative route calculated in step S403 as a search area. The zone selection device 140 provides information pertaining to the combined search areas determined as described above to the search device 150 and the display device 160, as explained earlier. Upon completing the processing in step S404, the processing shown in FIG. 9 ends.

As described earlier, the search device 150 executes a route search to determine a route from the origin to the destination, indicated via the input device 110, by caching the road data in the map data 120, which correspond to the roads in the parcels present within the search area having been input thereto from the zone selection device 140 and using the road data thus cached. The search device 150 searches for a route from the origin to the destination, constituted with a plurality of road links present within the search area made up with a group of parcels forming the minimum cost route, and also searches for a route from the origin to the destination constituted with a plurality of road links present within the search area made up with the group of parcels forming the alternative route. The search device 150 then provides the routes, indicated by the route search output results, to the display device 160.

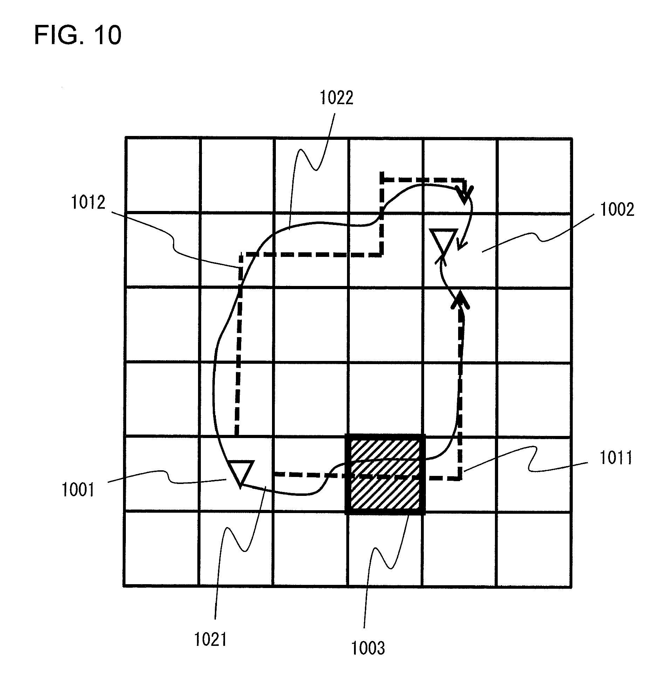

FIG. 10 illustrates how the zone selection device 140 may execute the processing shown in the flowchart presented in FIG. 9. The figure also illustrates how the search device 150 may execute the route search processing based upon the search area information input thereto from the zone selection device 140. FIG. 10 shows a route 1011 extending from an origin parcel 1001 to a destination parcel 1002, determined through the search executed in step S401 in FIG. 9. The group of parcels through which the route 1011 extends is designated as a search area and after the processing shown in FIG. 9 ends, the search device 150 executes a route search within this search area by using the road data in the map data 120. As a result, a route 1021 is determined. Assuming that a high-frequency parcel 1003 present on the route 1011 has been extracted through the processing executed in step S402 in FIG. 9, the group of parcels constituting an alternative route 1012 bypassing this high-frequency parcel 1000c is designated as a search area and after the processing in FIG. 9 ends, the search device 150 executes a route search by using the road data in the map data 120 within the search area thus designated so as to calculate a route 1022.

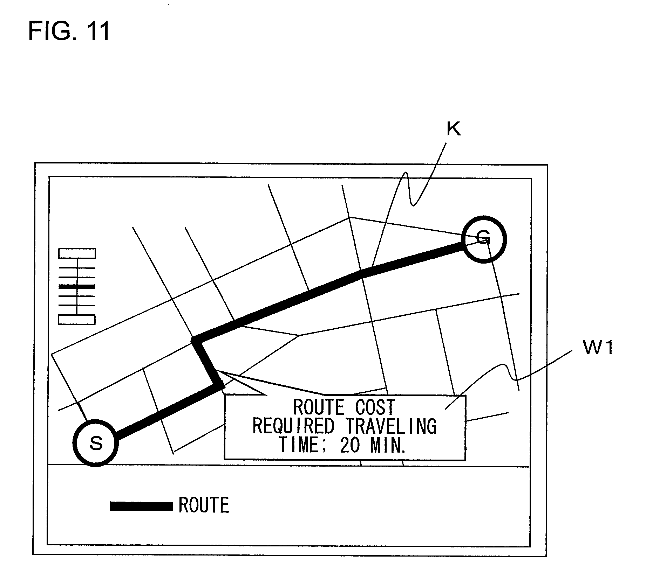

The display device 160 obtains data, to be used to draw a road map for displaying the origin, the destination and a route, extracted from the map data 120 based upon the route indicated in the route search output results provided from the search device 150 and the origin and the destination input via the input device 110, and brings up a display such as that shown in FIG. 11. FIG. 11 shows an origin S, a destination G, a route K and a window W1 providing information pertaining to the route K, displayed over the road map.

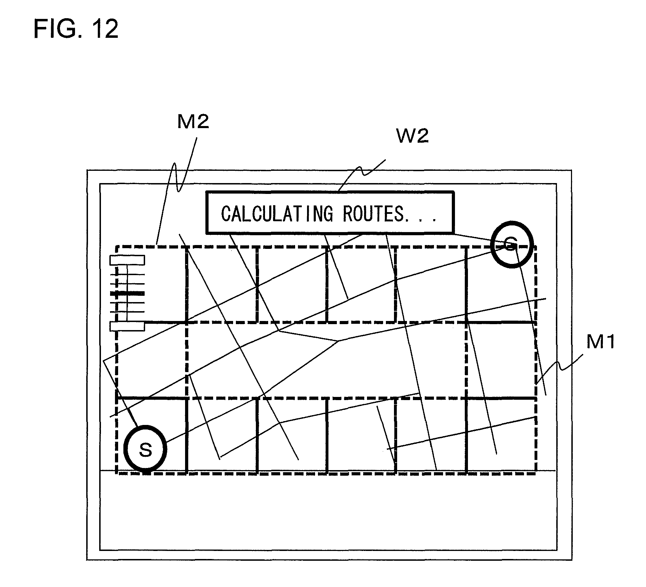

FIG. 12 shows a screen display of a road map with a search area M1 representing the group of parcels constituting the minimum cost route, a search area M2 representing the group of parcels constituting the alternative route and a window W2 with a message that route calculation is in progress superimposed over the road map, which may be brought up while the search device 150 is engaged in route search calculation following the end of the processing executed by the zone selection device 140. The search area M1 made up with the group of parcels constituting the minimum cost route includes a range of successive parcels, one set next to another along the horizontal direction, starting with the parcel to which the origin S belongs and continuing through the parcel located at the lower right end, and a range of successive parcels one set next to another along the vertical direction, starting at the lower right end and continuing through the parcel to which the destination G belongs. The search area M2 made up with the group of parcels constituting the alternative route includes a range of successive parcels, one set next to another along the vertical direction, starting with the parcel to which the origin S belongs and continuing through the parcel located at the upper left end, and a range of successive parcels one set next to another along the horizontal direction, starting at the upper left end and continuing through the parcel to which the destination G belongs.

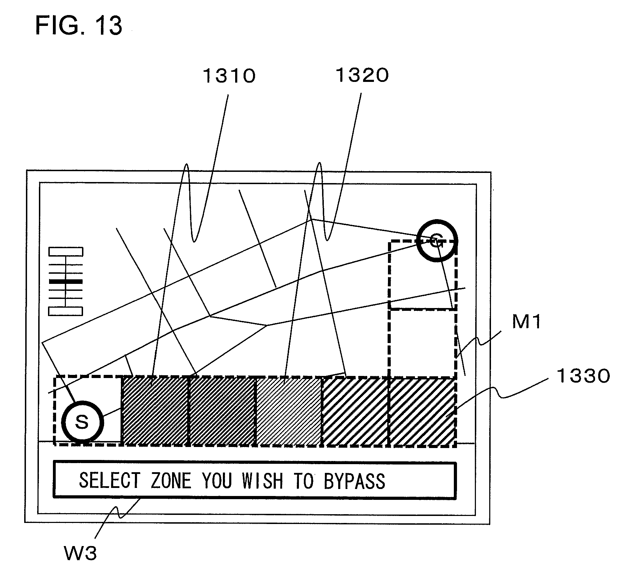

FIG. 13 shows a screen that may be brought up at the display device 160, indicating to the user the passage frequencies of the various parcels in the search area M1 so as to allow the user to select a high-frequency parcel to be extracted by the zone selection device 140. In this screen, the passage frequencies of the individual parcels present in the search area M1 are indicated by displaying the parcels at varying color density levels. A parcel with a low passage frequency is displayed in, for instance, white (low density color), a parcel with a high passage frequency is highlighted by using black (high density color) and a window W3 carrying a message prompting the user to select an area (parcel) with high passage frequency is also displayed. It is to be noted that the various color density levels at which the individual parcels are displayed are indicated by assuming different hatch patterns in FIG. 13. A parcel 1310, for instance, is highlighted by taking on the highest color density, a parcel 1320 takes on the second highest density after the parcel 1310 and a parcel 1330 takes on the lowest color density. A parcel with a hatch pattern identical to that of the parcel 1310, the parcel 1320 or the parcel 1330 is displayed with the color density matching that of the parcel 1310, the parcel 1320 or the parcel 1330. The parcel passage frequency information may be otherwise provided by bringing up an emphatic display such as a pop-up window carrying information on the parcel with high passage frequency. The parcel selected by the user is utilized as the high-frequency parcel in the calculation of the alternative route executed in step S403 in FIG. 9.

In the navigation system 100 described above, the search device 150 searches for a guided route extending from the origin to the destination over a search area containing the alternative route based upon the map data 120. The search area containing the alternative route is determined as the union of sets of the route search results obtained by the zone selection device 140 by searching for the minimum cost route from the origin parcel to the destination parcel based upon the zonal network data in the map data 120 and the route search results obtained by the zone selection device 140 by searching for an alternative route after adjusting the travel cost of the high passage frequency parcel present on the minimum cost route to a value representing the maximum cost (cost upper limit).

The navigation system 100 achieved in the embodiment includes the map data 120, the input device 110, the zone selection device 140 that executes a minimum cost route calculation processing in step S401 and the alternative route calculation processing in step S403 in the flowchart presented in FIG. 9, and the search device 150. The map data 120 express a road map containing a plurality of road links, which are sorted into groups, each corresponding to one of a plurality of partitioned areas referred to as parcels. The map data 120 include zonal network data with the information 24, indicating the connections among the plurality of parcels, determined based upon whether or not a road runs through successive parcels among the plurality of parcels, written therein. The user is able to enter an origin and a destination via the input device 110. In the minimum cost route calculation processing executed in step S401 in FIG. 9, the zone selection device 140 references the map data and calculates a minimum cost route, i.e., a route made up with successive parcels starting at the origin parcel to which the origin belongs and ending at the destination parcel to which the destination belongs, among the plurality of parcels, achieving the smallest parcel cost sum, by using the zonal network data in the map data. In the alternative route calculation processing executed in step S403 in FIG. 9, the zone selection device 140 calculates an alternative route from the origin parcel to the destination parcel by adjusting the parcel cost corresponding to the high-frequency parcel, among the group of parcels constituting the minimum cost route, to a value representing the cost upper limit. The search device 150 searches for a route extending from the origin to the destination, made up with a plurality of road links contained in the group of parcels constituting the minimum cost route, and also searches for a route extending from the origin to the destination, made up with a plurality of road links contained in the group of parcels constituting the alternative route.

Through these measures, the navigation system 100 is also able to search for a plurality of optimal guided routes by taking into consideration the alternative route while minimizing the volume of data that need to be stored while executing the guided route search processing. In other words, the route calculation executed in the navigation system 100 to determine the guided routes and the alternative route, extending from the origin to the destination, can be expedited. Since the plurality of guided routes thus determined do not overlap each other over a significant range, it is likely that the subject vehicle will be guided through another route among the plurality of guided routes even if the use of one route among the plurality of guided routes becomes inadvisable due to an unexpected development such as traffic congestion, an accident or the like.

The zone selection device 140 in the navigation system 100, executing the high-frequency parcel extraction processing in step S402 in FIG. 9, extracts a high-frequency parcel among the group of parcels constituting the minimum cost route, the passage frequency of which, indicating the number of routes passing through the particular parcel, among all the routes connecting all the pairs of parcels contained over a predetermined range within the road map expressed by the map data 120, is represented by a value greater than a predetermined value. The zone selection device 140 executing the alternative route calculation processing in step S403 in FIG. 9 adjusts the parcel cost corresponding to the high-frequency parcel by raising the travel cost for traveling between successive parcels including the high-frequency parcel extracted through the high-frequency parcel extraction processing in step S402. As a result, an alternative route bypassing the high-frequency parcel is determined.

The navigation system 100 includes the zonal network creation device 130. In correspondence to the parcel ID assigned to each parcel among the various parcels, the zonal network creation device 130 writes the information 24, indicating any parcel that connects with the subject parcel, and the information 25, indicating the passage frequency calculated for the subject parcel into the zonal network data. By using this zonal network data, a guided route extending from the origin to the destination and an alternative route extending from the origin to the destination can be calculated.

The navigation system 100 includes the display device 160 at which the group of parcels constituting the minimum cost route is brought up on display over the road map. The zone selection device 140 executing the high-frequency parcel extraction processing in step S402 extracts a high-frequency parcel selected by the user viewing the screen display showing the group of parcels constituting the minimum cost route brought up at the display device 160. As a result, an alternative route, which does not pass through the parcel that the user wishes to bypass, can be calculated.

The embodiment described above allows for the following variations.

The zone selection device 140 extracts the high-frequency parcel in step S402 in FIG. 9 and then adjusts the parcel cost corresponding to the high-frequency parcel to a value representing the cost upper limit in the following step S403. As an alternative, the zone selection device 140 may extract a parcel other than the high-frequency parcel in step S402 in FIG. 9 and then may adjust the parcel cost corresponding to the extracted parcel to a value representing the cost upper limit in the following step S403. The parcel extracted in this case may be, for instance, a parcel that includes a road segment where the user expects, through experience, traffic congestion, icy road conditions or the like, a parcel containing a road segment with heavy pedestrian traffic that is likely to hinder vehicle progress.

The search device 150 and the like may search for routes through a method other than the Dijkstra algorithm. Routes may be searched through, for instance, the Bellman-Ford algorithm.

The navigation system 100 does not need to be configured within a single casing. For instance, the navigation system 100 may be configured by installing the map data 120 and the zonal network creation device 130 in a server apparatus, disposing the input device 110, the zone selection device 140, the search device 150 and the display device 160 at a terminal apparatus and enabling the server apparatus and the terminal apparatus to communicate with each other so as to allocate different functions to the server apparatus and the terminal apparatus.

The present invention is not limited to the navigation system 100 utilized in automotive applications, and it may be adopted in a navigation system for pedestrian use that displays a foot travel map at a mobile terminal.

The embodiments and variations thereof described above may be adopted in any combination. In addition, as long as the features characterizing the present invention are not compromised, the invention is in no way limited to the particulars of the embodiments described above and other modes.

The above described embodiments are examples, and various modifications can be made without departing from the scope of the invention.

## Claims

1. A navigation system, comprising:
map data (120) expressing a road map with a plurality of road links divided into a plurality of parcels, which include zonal network data indicating connections among the plurality of parcels, each determined based upon whether or not a road runs astride successive parcels among the plurality of parcels;
an input means for inputting an origin and a destination;
a minimum cost route calculating means for calculating a first parcel group constituting a minimum cost route achieving a least sum of travel costs corresponding to parcels present over a range extending from an origin parcel to which the origin belongs to a destination parcel to which the destination belongs, among the plurality of parcels, by referencing the map data and using the zonal network data in the map data; **characterized in** further comprising
an alternative route calculating means for calculating a second parcel group constituting an alternative route extending from the origin parcel to the destination parcel by adjusting a travel cost
corresponding to a partial parcel which is part of the first parcel group; and
a route search means for searching for a route extending from the origin to the destination, which is made up with the plurality of road links included in the first parcel group and for searching for a route extending from the origin to the destination, which is made up with the plurality of road links included in a second parcel group,
wherein
the minimum cost route calculated by the minimum cost route calculating means achieves a least sum of travel costs each calculated based upon a distance between the successive parcels,
the navigation system (100) further comprising:
a high-frequency parcel extracting means for extracting, as the partial parcel, a high-frequency parcel with a passage frequency thereof, with which all routes each connecting parcels among all parcels present within an area over a predetermined range of the road map, pass through the high-frequency parcel, represented by a value greater than a predetermined value, wherein:
the alternative route calculating means adjusts the travel cost by increasing the travel costs of traveling the successive parcels that include the partial parcel having been extracted by the high-frequency parcel extracting means.

2. A navigation system according to claim 1, further comprising:
a zonal network creating means for writing, in correspondence to a parcel ID assigned to each parcel among the plurality of parcels, information indicating the connections and information indicating the passage frequency into the zonal network data.

3. A navigation system according to claim 1, further comprising:
a display device that brings up a screen display of the first parcel group over the road map, wherein:
the display device highlights the high-frequency parcel with the passage frequency thereof represented by the value greater than the predetermined value on the screen display brought up at the display device; and
when a user selects the high-frequency parcel from the first parcel group on the screen display at the display device, the high-frequency parcel extracting means extracts the high-frequency parcel selected by the user as the partial parcel.

4. A navigation system according to any one of claims 1 through 3, further comprising:
a display device that brings up a screen display of the first parcel group over the road map.

5. A navigation system according to claim 4, wherein:
the display means brings up a screen display of the first parcel group and the second parcel group over the road map while a route calculation executed by the route search means to determine a route from the origin to the destination is in progress.

6. A route search method with map data (120) expressing a road map with a plurality of road links divided into a plurality of parcels, which include zonal network data indicating connections among the plurality of parcels, each determined based upon whether or not a road runs astride successive parcels among the plurality of parcels, the method comprising:
calculating, in response to an input of an origin and a destination, a first parcel group constituting a minimum cost route achieving a least sum of travel costs corresponding to parcels present over a range extending from an origin parcel to which the origin belongs to a destination parcel to which the destination belongs;
calculating a first parcel group constituting an alternative route extending from the origin parcel to the destination parcel by adjusting a travel cost corresponding to a partial parcel that is part of the first parcel group; and
searching for a route extending from the origin to the destination, which is made up with a plurality of road links included in the first parcel group, and searching for a route extending from the origin to the destination, which is made up with a plurality of road links included in the second parcel group, wherein
the minimum cost route calculated achieves a least sum of travel costs each calculated based upon a distance between the successive parcels, and
extracting, as the partial parcel, a high-frequency parcel with a passage frequency thereof, with which all routes each connecting parcels among all parcels present within an area over a predetermined range of the road map, pass through the high-frequency parcel, represented by a value greater than a predetermined value, wherein:
the travel cost is adjusted by increasing the travel costs of traveling the
successive parcels that include the partial parcel having been extracted.

## Patentansprüche

1. Navigationssystem, das Folgendes umfasst:
Kartendaten (120), die eine Straßenkarte mit mehreren Straßenverbindungen angeben, die in mehrere Parzellen unterteilt ist, die Zonennetzdaten enthalten, die Verbindungen zwischen den mehreren Parzellen angeben, wovon jede anhand der Tatsache bestimmt ist, ob eine Straße durch aufeinander folgende Parzellen der mehreren Parzellen verläuft oder nicht;
Eingabemittel zum Eingeben eines Ausgangspunkts und eines Ziels;
Minimalkostenrouten-Berechnungsmittel zum Berechnen einer ersten Parzellengruppe, die eine Minimalkostenroute bildet, die eine kleinste Summe von Reisekosten ergibt, die Parzellen entspricht, die in einem Bereich vorhanden sind, der sich von einer Ausgangspunktparzelle, zu der der Ausgangspunkt gehört, zu einer Zielparzelle, zu der das Ziel gehört, der mehreren Parzellen erstreckt, indem auf die Kartendaten Bezug genommen wird und die Zonennetzdaten in den Kartendaten verwendet werden; **dadurch gekennzeichnet, dass** es ferner Folgendes umfasst:
Alternativrouten-Berechnungsmittel zum Berechnen einer zweiten Parzellengruppe, die eine alternative Route bildet, die sich von der Ausgangspunktsparzelle zu der Zielparzelle erstreckt, indem Reisekosten eingestellt werden, die einer Partialparzelle entsprechen, die ein Teil der ersten Parzellengruppe ist, und
Routensuchmittel zum Suchen einer Route, die sich von dem Ausgangspunkt zu dem Ziel erstreckt und die aus den mehreren Straßenverbindungen gebildet ist, die in der ersten Parzellengruppe enthalten sind, und zum Suchen einer Route, die sich von dem Ausgangspunkt zu dem Ziel erstreckt und die aus den mehreren Straßenverbindungen gebildet ist, die in einer zweiten Parzellengruppe enthalten sind,
wobei die Minimalkostenroute, die durch die Minimalkostenrouten-Berechnungsmittel berechnet wird, eine kleinste Summe von Reisekosten ergibt, die jeweils anhand einer Entfernung zwischen aufeinander folgenden Parzellen berechnet werden,
wobei das Navigationssystem (100) ferner Folgendes umfasst:
Hochfrequenz-Parzellenextraktionsmittel, um als die Partialparzelle eine Hochfrequenzparzelle mit ihrer Durchgangsfrequenz, mit der alle Routen, die jeweils Parzellen unter sämtlichen Parzellen verbinden, die in einem Gebiet in einem vorgegebenen Bereich der Straßenkarte vorhanden sind, durch die Hochfrequenzparzelle verlaufen und die durch einen Wert dargestellt wird, der größer als ein vorgegebener Wert ist, zu extrahieren, wobei:
die Alternativrouten-Berechnungsmittel die Reisekosten durch Erhöhen der Reisekosten des Reisens durch die aufeinander folgenden Parzellen, die die Partialparzelle, die durch die Hochfrequenzparzellen-Extraktionsmittel extrahiert worden ist, enthalten.

2. Navigationssystem nach Anspruch 1, das ferner Folgendes umfasst:
Zonennetz-Erzeugungsmittel, um in Entsprechung mit einer Parzellenkennung, die jeder Parzelle unter den mehreren Parzellen zugewiesen ist, Informationen, die die Verbindungen angeben, und Informationen, die die Durchgangsfrequenz angeben, in die Zonennetzdaten zu schreiben.

3. Navigationssystem nach Anspruch 1, das ferner Folgendes umfasst:
eine Anzeigevorrichtung, die eine Bildschirmanzeige der ersten Parzellengruppe über der Straßenkarte bereitstellt, wobei:
die Anzeigevorrichtung die Hochfrequenzparzelle mit ihrer Durchgangsfrequenz, die durch den Wert dargestellt wird, der größer als der vorgegebene Wert ist, auf der Bildschirmanzeige, die durch die Anzeigevorrichtung bereitgestellt wird, hervorhebt; und
dann, wenn ein Anwender die Hochfrequenzparzelle aus der ersten Parzellengruppe in der Bildschirmanzeige auf der Anzeigevorrichtung wählt, die Hochfrequenzparzellen-Extraktionsmittel die Hochfrequenzparzelle, die durch den Anwender ausgewählt wird, als die Partialparzelle extrahieren.

4. Navigationssystem nach einem der Ansprüche 1 bis 3, das ferner Folgendes umfasst:
eine Anzeigevorrichtung, die eine Bildschirmanzeige der ersten Parzellengruppe über der Straßenkarte bereitstellt.

5. Navigationssystem nach Anspruch 4, wobei:
die Anzeigemittel eine Bildschirmanzeige der ersten Parzellengruppe und der zweiten Parzellengruppe auf der Straßenkarte bereitstellen, während eine Routenberechnung, die durch die Routensuchmittel ausgeführt wird, um eine Route von dem Ausgangspunkt zu dem Ziel zu bestimmen, im Fortschreiten ist.

6. Routensuchverfahren mit Kartendaten (120), die eine Straßenkarte mit mehreren Straßenverbindungen angeben, die in mehrere Parzellen unterteilt ist, die Zonennetzdaten enthalten, die Verbindungen zwischen mehreren Parzellen angeben, wovon jede anhand der Tatsache bestimmt ist, ob eine Straße durch aufeinander folgende Parzellen der mehreren Parzellen verläuft oder nicht, wobei das Verfahren Folgendes umfasst:
in Reaktion auf eine Eingabe eines Ausgangspunkts und eines Ziels Berechnen einer ersten Parzellengruppe, die eine Minimalkostenroute bildet, die eine kleinste Summe von Reisekosten ergibt, die Parzellen entsprechen, die in einem Bereich vorhanden sind, der sich von einer Ausgangspunktsparzelle, zu der der Ausgangspunkt gehört, zu einer Zielparzelle, zu der das Ziel gehört, erstreckt;
Berechnen einer ersten Parzellengruppe, die eine alternative Route bildet, die sich von der Ausgangspunktsparzelle zu der Zielparzelle erstreckt, indem Reisekosten eingestellt werden, die einer Partialparzelle entsprechen, die ein Teil der ersten Parzellengruppe ist; und
Suchen nach einer Route, die sich von dem Ausgangspunkt zu dem Ziele erstreckt, die aus mehreren Straßenverbindungen gebildet ist, die in der ersten Parzellengruppe enthalten sind, und Suchen nach einer Route, die sich von dem Ausgangspunkt zu dem Ziel erstreckt, die aus mehreren Straßenverbindungen gebildet ist, die in der zweiten Parzellengruppe enthalten sind, wobei
die berechnete Minimalkostenroute eine kleinste Summe von Reisekosten ergibt, die alle anhand einer Entfernung zwischen den aufeinander folgenden Parzellen berechnet werden, und
als die Partialparzelle eine Hochfrequenzparzelle mit ihrer Durchgangsfrequenz, mit der alle Routen, wovon jede Parzellen unter sämtlichen Parzellen, die in einem Gebiet in einem vorgegebenen Bereich der Straßenkarte vorhanden sind, verbindet, durch die Hochfrequenzparzelle verlaufen und die durch einen Wert dargestellt wird, der größer als ein vorgegebener Wert ist, extrahiert wird, wobei:
die Reisekosten durch Erhöhen der Reisekosten des Reisens durch die aufeinander folgenden Parzellen, die die Partialparzelle, die extrahiert worden ist, enthalten, eingestellt werden.

## Revendications

1. Système de navigation, comprenant :
des données de cartographie (120) exprimant une carte routière avec une pluralité de liaisons routières divisée en une pluralité de parcelles, qui incluent des données de réseau zonal indiquant des connexions parmi la pluralité de parcelles, chacune déterminée en se basant sur la question de savoir si une route se déroule ou non à cheval sur des parcelles successives parmi la pluralité de parcelles ;
un moyen d'entrée pour entrer une origine et une destination ;
un moyen de calcul d'itinéraire à coût minimum pour calculer un premier groupe de parcelles constituant un itinéraire à coût minimum assurant une moindre somme de coût de voyage correspondant aux parcelles présentes sur une plage s'étendant depuis une parcelle d'origine à laquelle appartient l'origine jusqu'à une parcelle de destination à laquelle appartient la destination, parmi la pluralité de parcelles, par référence aux données de cartographie et en utilisant les données de réseau zonal dans les données de cartographie ;
**caractérisé en ce qu'**il comprend en outre
un moyen de calcul d'itinéraire alternatif pour calculer un second groupe de parcelles constituant un itinéraire alternatif s'étendant depuis la parcelle d'origine jusqu'à la partie de destination en ajustant un coût de voyage correspondant à une parcelle partielle qui fait partie du premier groupe de parcelles ; et
un moyen de recherche d'itinéraire pour rechercher un itinéraire s'étendant depuis l'origine jusqu'à la destination, qui est constitué avec la pluralité de liaisons routières incluses dans le premier groupe de parcelles et pour rechercher un itinéraire s'étendant depuis l'origine à la destination, qui est constitué avec la pluralité de liaisons routières incluses dans le second groupe de parcelles,
dans lequel l'itinéraire à coût minimum calculé par le moyen de calcul d'itinéraire à coût minimum assure une moindre somme des coûts de voyage calculés chacun en se basant sur une distance entre les parcelles successives,
le système de navigation (100) comprenant en outre :
un moyen d'extraction de parcelle à haute fréquence pour extraire, à titre de parcelle partielle, une parcelle à haute fréquence avec une fréquence de passage de celle-ci avec laquelle tous les itinéraires qui connectent chacune des parcelles parmi toutes les parcelles présentes dans une zone sur une plage prédéterminée de la carte routière, passe à travers la parcelle à haute fréquence, représentée par une valeur plus grande qu'une valeur prédéterminée, dans lequel :
le moyen de calcul d'itinéraire alternatif ajuste le coût de voyage en augmentant les coûts de voyage pour parcourir les parcelles successives qui incluent la parcelle partielle qui a été extraite par le moyen d'extraction de parcelle à haute fréquence.

2. Système de navigation selon la revendication 1, comprenant en outre :
un moyen de création de réseau zonal afin d'écrire, en correspondance à un identificateur de parcelle attribué à chaque parcelle parmi la pluralité de parcelles, une information indiquant les connexions et une information indiquant la fréquence de passage, dans les données de réseau zonal.

3. Système de navigation selon la revendication 1, comprenant en outre :
un dispositif d'affichage qui présente un affichage sur écran du premier groupe de parcelles sur la carte routière, dans lequel :
le dispositif d'affichage met en lumière la parcelle à haute fréquence, avec la fréquence de passage de celle-ci représentée par la valeur plus grande que la valeur prédéterminée sur l'affichage sur écran présenté sur le dispositif d'affichage ; et
quand un utilisateur sélectionne la parcelle à haute fréquence parmi le premier groupe de parcelles sur l'affichage sur écran sur le dispositif d'affichage, le moyen d'extraction de parcelle à haute fréquence extrait la parcelle à haute fréquence sélectionnée par l'utilisateur à titre de parcelle partielle.

4. Système de navigation selon l'une quelconque des revendications 1 à 3, comprenant en outre :
un dispositif d'affichage qui présente un affichage sur écran du premier groupe de parcelles sur la carte routière.

5. Système de navigation selon la revendication 4, dans lequel :
le moyen d'affichage présente un affichage sur écran du premier groupe de parcelles et du second groupe de parcelles sur la carte routière alors qu'un calcul d'itinéraire exécuté par le moyen de recherche d'itinéraire pour déterminer un itinéraire depuis l'origine jusqu'à la destination est en cours.

6. Procédé de recherche d'itinéraire avec des données de cartographie (120) exprimant une carte routière avec une pluralité de liaisons routières divisées en une pluralité de parcelles, qui inclut des données de réseau zonal indiquant des connexions parmi la pluralité de parcelles, chacune déterminée en se basant sur la question de savoir si une route se déroule ou non à cheval sur des parcelles successives parmi la pluralité de parcelles, le procédé comprenant les étapes consistant à :
calculer, en réponse à l'entrée d'une origine et d'une destination, un premier groupe de parcelles constituant un itinéraire à assurant une somme moindre des coûts de voyage correspondant aux parcelles présentes sur une plage s'étendant depuis une parcelle d'origine à laquelle appartient l'origine jusqu'à une parcelle de destination à laquelle appartient la destination ;
calculer un premier groupe de parcelles constituant un itinéraire alternatif s'étendant depuis la parcelle d'origine jusqu'à la parcelle de destination en ajustant un coût de voyage correspondant à une parcelle partielle qui fait partie du premier groupe partiel ;
et
rechercher un itinéraire s'étendant depuis l'origine jusqu'à la destination, qui est constitué d'une pluralité de liaisons routières incluses dans le premier groupe de parcelles,
et rechercher un itinéraire s'étendant depuis l'origine jusqu'à la destination, qui est constitué d'une pluralité de liaisons routières incluses dans le second groupe de parcelles,
dans lequel
l'itinéraire à coût minimum calculé assure une moindre somme des coûts de voyage, calculés chacun sur la base d'une distance entre les parcelles successives, et
extraire, à titre de parcelle partielle, une parcelle à haute fréquence avec une fréquence de passage de celle-ci, avec laquelle tous les itinéraires qui sont chacun connectés à des parcelles parmi toutes les parcelles présentes dans une aire sur une plage prédéterminée de la carte routière, passe à travers la parcelle à haute fréquence, représentée par une valeur plus grande que la valeur prédéterminée, dans lequel :
le coût de voyage est ajusté en augmentant les coûts de voyage pour parcourir les parcelles successives qui incluent la parcelle partielle qui a été extraite.
